# FASCICULE DE BREVET EUROPEEN

(11) **EP 3 329 213 B1**
(45) Date de publication et mention de la délivrance du brevet: **09.10.2019**
(21) Numéro de dépôt: 16744383.7
(22) Date de dépôt: 26.07.2016
(51) Int. Cl.: G01C 19/5783, F16F 15/08, G01C 21/16

(54) **DISPOSITIF DE MESURE INERTIELLE A DOUBLE SUSPENSION**
TRÄGHEITSMESSVORRICHTUNG MIT DOPPELTER AUFHÄNGUNG
INERTIAL MEASUREMENT DEVICE WITH DUAL SUSPENSION

(30) Priorité: 31.07.2015 FR 1557416
(43) Date de publication de la demande: 06.06.2018
(73) Titulaire: Safran Electronics & Defense, 92100 Boulogne-Billancourt (FR)
(72) Inventeur: FOLOPPE, Yannick, 92100 Boulogne Billancourt (FR); GIBOURY, Guillaume, 92100 Boulogne Billancourt (FR)
(74) Mandataire: Lavialle, Bruno François Stéphane
(86) Numéro de dépôt international: PCT/EP2016/067836
(87) Numéro de publication internationale: WO 2017/021237

(56) Documents cités:
- CN-A- 103 742 580
- US-A1- 2010 011 952
- US-A1- 2010 125 404
- US-A1- 2013 241 376

## Description

La présente invention concerne la mesure inertielle au moyen de capteurs de mouvement embarqués sur un véhicule, par exemple un aéronef, dans le but de déterminer l'attitude et/ou le vecteur vitesse du véhicule.

### ETAT DE LA TECHNIQUE

Il est connu des dispositifs de mesure inertielle comprenant un bâti, une platine montée dans le bâti par l'intermédiaire d'un premier étage de suspension, une unité de mesure inertielle monté sur la platine par l'intermédiaire d'un deuxième étage de suspension. Le deuxième étage a une fréquence de résonance inférieure à une bande passante de l'unité de mesure inertielle et supérieure à une fréquence de résonance du premier étage. Le premier étage et le deuxième étage comprennent chacun quatre éléments de suspension. Le bâti est agencé pour être fixé dans le véhicule.

Une telle structure est relativement encombrante, ce qui complique l'implantation du dispositif dans le véhicule. Cet inconvénient est particulièrement gênant dans certaines applications qui nécessitent une redondance d'équipements et, donc, de pouvoir installer dans le véhicule plusieurs dispositifs de mesure inertielle.

Il est connu du document US-A-2010/011952 un dispositif d'amortissement pour une centrale inertielle montée sur un canon. Ce dispositif de mesure inertielle comprend un bâti, une platine reliée au bâti par l'intermédiaire d'un premier étage de suspension, une unité de mesure inertielle qui comprend des capteurs vibrants ayant des premiers modes propres de vibration prédéterminés et qui est montée sur la platine par l'intermédiaire d'un deuxième étage de suspension, le premier étage comprenant quatre éléments élastiques de suspension. Il est connu du document US-A-2013/241376 un dispositif d'amortissement de même type.

### OBJET DE L'INVENTION

Un but de l'invention est de fournir un dispositif de mesure inertielle présentant une structure plus compacte et moins onéreuse à fabriquer.

### BREF EXPOSE DE L'INVENTION

A cet effet, on prévoit, selon l'invention, un dispositif de mesure inertielle comprenant un bâti, une platine reliée au bâti par l'intermédiaire d'un premier étage de suspension, une unité de mesure inertielle qui comprend des capteurs vibrants et qui est montée sur la platine par l'intermédiaire d'un deuxième étage de suspension. Le premier étage a une fréquence de résonance inférieure à une bande passante de l'unité de mesure inertielle et le deuxième étage a une fréquence de résonance supérieure à la fréquence de résonance du premier étage. Le premier étage comprend quatre éléments élastiques de suspension et a un centre de raideur correspondant sensiblement au centre de gravité de l'ensemble formé par la platine, le deuxième étage et l'unité de mesure inertielle. Le deuxième étage comprend entre un et trois éléments élastiques de suspension.

Le premier étage assure le filtrage des chocs et vibrations par rapport à l'environnement. Le premier étage absorbe les gros chocs et les vibrations de relativement basses fréquences grâce à une capacité de débattement plus importante que celle du deuxième étage (la capacité de débattement étant proportionnelle à l'inverse du carré de la fréquence de résonance). Le deuxième étage filtre les vibrations de relativement hautes fréquences et empêche que la platine ne transmette des vibrations d'un des capteurs de l'unité de mesure inertielle à un autre des capteurs de l'unité de mesure inertielle : on évite ainsi que les capteurs de l'unité de mesure inertielle ne se perturbent mutuellement. Par le choix des fréquences de résonance, les deux étages de suspensions ont des modes propres qui sont isolés l'un de l'autre. Cette structure est très avantageuse par le faible encombrement du deuxième étage de suspension qui permet d'avoir une bonne compacité du dispositif tout en conservant un filtrage des vibrations à relativement hautes fréquences.

De préférence, le deuxième étage comprend trois éléments élastiques de suspension.

Cet agencement du deuxième étage est celui autorisant les meilleures performances.

Avantageusement, le deuxième étage a un centre de raideur correspondant sensiblement au centre de gravité de l'unité de mesure inertielle.

Ceci autorise la meilleure précision.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en perspective d'un dispositif selon un premier mode de réalisation ;
- la figure 2 est une vue schématique en perspective d'un dispositif selon un deuxième mode de réalisation.

### DESCRIPTION DETAILLEE DE L'INVENTION

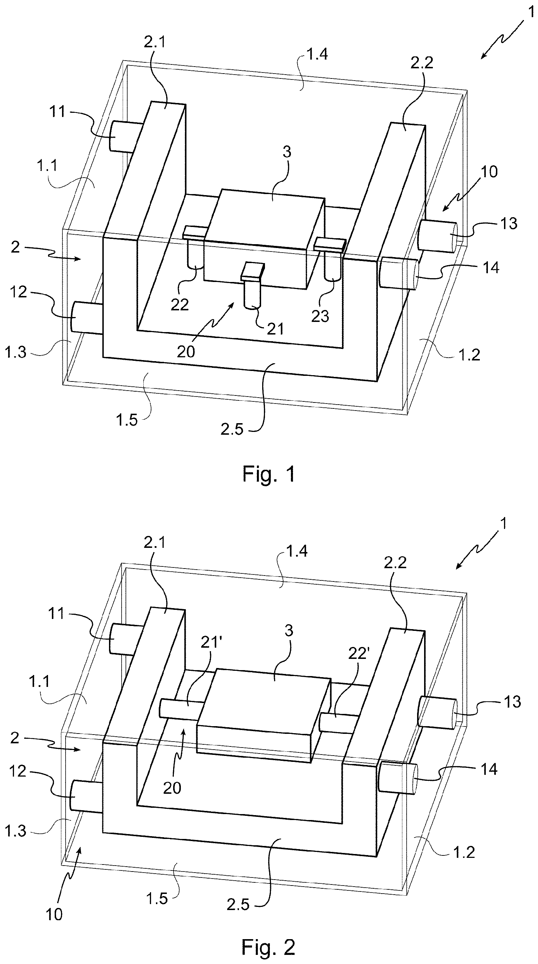

En référence à la figure 1, le dispositif selon le premier mode de réalisation de l'invention comprend un bâti généralement désigné en 1 (représenté transparent sur la figure), une platine généralement désignée en 2 et reliée au bâti 1 par l'intermédiaire d'un premier étage de suspension généralement désigné en 10, une unité de mesure inertielle 3 reliée à la platine 2 par l'intermédiaire d'un deuxième étage de suspension généralement désigné en 20.

Le bâti 1 a ici la forme d'un boîtier, de section rectangulaire ou carrée, délimité par quatre côtés 1.1, 1.2, 1.3, 1.4 et un fond 1.5 destiné à être rigidement fixé sur un porteur tel qu'un véhicule. Le boîtier est ouvert sur le haut en regard du fond et le bâti 1 comporte un couvercle non représenté qui vient fermer le boîtier.

La platine 2 a ici la forme d'un berceau parallélépipédique, de section correspondant à celle du boîtier formant le bâti 1 pour être engagé avec un jeu périphérique dans le boîtier formant le bâti 1. La platine 2 comprend ailes latérales 2.1, 2.2 opposées, en regard des côtés 1.1, 1.2, et une âme centrale 2.5 qui s'étend en regard du fond 1.5 et relie l'un à l'autre les bords inférieurs des ailes 2.1, 2.2.

L'unité de mesure inertielle 3 est connue en elle-même et comprend des capteurs de mouvement angulaire, de type gyroscope ou gyromètre, et des capteurs de mouvement linéaire de type accéléromètre. Les capteurs sont alignés sur les axes d'un repère de mesure et sont reliés à une unité électronique de commande non représentée ici. Les capteurs sont des capteurs vibrants ayant des premiers modes propres de vibration prédéterminés. Les capteurs sont ici des microsystèmes électromécaniques ou MEMS.

Le premier étage de suspension 10 comprend quatre éléments élastiques de suspension, ici des plots 11, 12, 13, 14 en élastomère et de forme cylindrique. Les plots 11 et 12 ont chacun une extrémité fixée au côté 1.1 du boîtier et une extrémité fixée à l'aile 2.1 de la platine 2 : les plots 11, 12 sont alignés sur une diagonale du côté 1.1. Les plots 13 et 14 ont chacun une extrémité fixée au côté 1.2 du boîtier et une extrémité fixée à l'aile 2.2 de la platine 2. Les plots 13, 14 sont alignés sur une diagonale du côté 1.2. Le positionnement des plots 11, 12, 13, 14 est tel que :
- les plots 11, 12 sont symétriquement disposés de part et d'autre du milieu de la diagonale,
- les plots 13, 14 sont symétriquement disposés de part et d'autre du milieu de la diagonale et sont séparés de celui-ci d'une distance égale à la distance séparant les plots 11, 12 du milieu de la diagonale sur laquelle les plots 11, 12 sont alignés,
- la diagonale sur laquelle sont alignés les plots 11, 12 n'est pas parallèle à celle sur laquelle sont alignés les plots 13, 14 ;
- les axes centraux des plots sont parallèles les uns aux autres et perpendiculaires aux ailes 2.1, 2.2 et aux côtés 1.1, 1.2.

Le deuxième étage 20 comprend trois éléments élastiques de suspension, ici des plots 21, 22, 23 en élastomère et de forme cylindrique. Les plots 21, 22 et 23 ont chacun une extrémité fixée à l'âme centrale 2.5 et une extrémité fixée à l'unité de mesure inertielle 3 qui est disposée entre les ailes 2.1, 2.2 et est suspendue au-dessus de l'âme centrale 2.5. Les plots 21, 22, 23 sont positionnés aux sommets d'un triangle parallèle à l'âme centrale 2.5. Les axes centraux des plots 21, 22, 23 sont perpendiculaires à l'âme centrale 2.5.

Le premier étage 10 a une fréquence de résonance inférieure à une bande passante de l'unité de mesure inertielle 3.

Le deuxième étage 20 a une fréquence de résonance supérieure à une fréquence de résonance du premier étage 10 et inférieure aux premiers modes propres des capteurs vibrants. A titre d'exemple, les capteurs vibrants ayant des premiers modes propres au-delà de 4000 Hz et une bande passante de l'ordre de 500 Hz, le premier étage aura une fréquence de résonance de 100 Hz, le deuxième étage a une fréquence de résonance de 800 Hz.

Le premier étage 10 a un centre de raideur correspondant sensiblement au centre de gravité de l'ensemble formé par la platine 2, le deuxième étage 20 et l'unité de mesure inertielle 3.

Le deuxième étage 20 a un centre de raideur correspondant sensiblement au centre de gravité de
l'unité de mesure inertielle 3.

Les éléments identiques ou analogues à ceux précédemment décrits porteront une référence numérique identique à ceux-ci dans la description qui suit du deuxième mode de réalisation en relation avec la figure 2.

Comme dans le premier mode de réalisation, le dispositif conforme au deuxième mode de réalisation comprend un bâti 1, une platine 2, un premier étage de suspension à quatre plots 11, 12, 13, 14, et une unité de mesure inertielle 3.

Le dispositif comporte également un deuxième étage de suspension mais celui-ci ne comporte plus que deux éléments de suspension, à savoir les plots 21' et 22'. Ces plots 21' et 22' sont en élastomère et de forme cylindrique, et sont coaxiaux l'un à l'autre. Les plots 21' et 22' ont des axes centraux parallèles aux axes centraux des plots 11, 12, 13, 14.

Bien entendu, l'invention n'est pas limitée aux modes de réalisation décrits mais englobe toute variante entrant dans le champ de l'invention telle que définie par les revendications.

En particulier, le deuxième étage de suspension peut comprendre moins de trois éléments élastiques de suspension et par exemple deux éléments élastiques de suspension, voire un seul pour une unité de mesure inertielle de faible encombrement.

Le positionnement des éléments de suspension peut en outre être différent.

Le bâti et la platine peuvent avoir d'autres formes. Le bâti peut par exemple avoir la forme d'un berceau. La platine peu par exemple avoir la forme d'un boîtier.

L'unité de mesure inertielle peut être d'un autre type que celle décrite et par exemple ne pas comprendre de capteur de type MEMS ou comprendre des capteurs à plusieurs axes sensibles.

## Revendications

1. Dispositif de mesure inertielle comprenant un bâti (1), une platine (2) reliée au bâti par l'intermédiaire d'un premier étage de suspension (10), une unité de mesure inertielle (3) qui comprend des capteurs vibrants ayant des premiers modes propres de vibration prédéterminés et qui est montée sur la platine par l'intermédiaire d'un deuxième étage de suspension (20), le premier étage comprenant quatre éléments élastiques de suspension (11, 12, 13, 14) ; **caractérisé en ce que** le premier étage a une fréquence de résonance inférieure à une bande passante de l'unité de mesure inertielle et le deuxième étage a une fréquence de résonance supérieure à une fréquence de résonance du premier étage et inférieure aux premiers modes propres des capteurs vibrants, **en ce que** le premier étage a un centre de raideur correspondant sensiblement au centre de gravité de l'ensemble formé par la platine, le deuxième étage et l'unité de mesure inertielle ; et ce que le deuxième étage comprend entre un et trois éléments élastiques de suspension (21, 22, 23).

2. Dispositif selon la revendication 1, dans lequel le deuxième étage (20) comprend trois éléments élastiques de suspension (21, 22, 23).

3. Dispositif selon la revendication 1, dans lequel le deuxième étage (20) a un centre de raideur correspondant sensiblement au centre de gravité de l'unité de mesure inertielle (3).

4. Dispositif selon la revendication 1, dans lequel l'unité de mesure inertielle (3) comprend des capteurs de type MEMS.

## Patentansprüche

1. Trägheitsmessvorrichtung, umfassend ein Gestell (1), eine Platte (2), die mit dem Gestell über eine erste Aufhängungsstufe (10) verbunden ist, und eine Trägheitsmesseinheit (3), die Schwingungssensoren umfasst, die vorbestimmte erste Eigenschwingungsmoden haben, und die auf der Platte über eine zweite Aufhängungsstufe (20) montiert ist, wobei die erste Stufe vier elastische Aufhängungselemente (11, 12, 13 14) umfasst; **dadurch gekennzeichnet, dass** die erste Stufe eine Resonanzfrequenz hat, die kleiner als eine Bandbreite der Trägheitsmesseinheit ist, und die zweite Stufe eine Resonanzfrequenz hat, die größer als eine Resonanzfrequenz der ersten Stufe und kleiner als erste Eigenmoden der Schwingungssensoren ist, dass die erste Stufe ein Steifigkeitszentrum hat, das im Wesentlichen dem Schwerpunkt der Einheit entspricht, die aus der Platine, der zweiten Stufe und der Trägheitsmesseinheit gebildet ist; und dass die zweite Stufe zwischen einem und drei elastische Aufhängungselemente (21, 22, 23) umfasst.

2. Vorrichtung nach Anspruch 1, bei der die zweite Stufe (20) drei elastische Aufhängungselemente (21, 22, 23) umfasst.

3. Vorrichtung nach Anspruch 1, bei der die zweite Stufe (20) ein Steifigkeitszentrum hat, das im Wesentlichen dem Schwerpunkt der Trägheitsmesseinheit (3) entspricht.

4. Vorrichtung nach Anspruch 1, bei der die Trägheitsmesseinheit (3) Sensoren vom Typ MEMS umfasst.

## Claims

1. An inertial measurement device comprising a housing (1), a plate (2) connected to the housing via a first stage of suspension (10), an inertial measurement unit(3) comprising vibrating sensors having predetermined first resonant modes of vibration and mounted on the plate via a second stage of suspension (20), the first stage having four resilient suspension elements (11, 12, 13, 14); **characterized in that** the first stage has a resonant frequency lower than a bandwidth of the inertial measurement unit, and the second stage has a resonant frequency higher than a resonant frequency of the first stage and lower than the first resonant modes of the vibrating sensors, wherein the first stage has a center of stiffness corresponding substantially to the center of gravity of the assembly formed by the plate, the second stage, and the inertial measurement unit; and wherein the second stage has one to three resilient suspension elements (21, 22, 23)

2. A device according to claim 1, wherein the second stage (20) comprises three resilient suspension elements (21, 22, 23).

3. A device according to claim 1, wherein the second stage (20) has a center of stiffness corresponding substantially to the center of gravity of the inertial measurement unit (3).

4. A device according to claim 1, wherein the inertial measurement unit (3)has MEMS type sensors.
